(19) **Europäisches Patentamt / European Patent Office / Office européen des brevets**

(11) **EP 3 542 192 B1**

(12) **EUROPEAN PATENT SPECIFICATION**

(45) Date of publication and mention
of the grant of the patent:
**23.06.2021 Bulletin 2021/25**

(21) Application number: **17822015.8**

(22) Date of filing: **15.11.2017**

(51) Int Cl.:
***G01W 1/14*** *(2006.01)*

(86) International application number:
**PCT/IB2017/057126**

(87) International publication number:
**WO 2018/092031 (24.05.2018 Gazette 2018/21)**

(54) **SYSTEM AND METHOD FOR THE ENVIRONMENTAL MONITORING OF PRECIPITATION EVENTS**

SYSTEM UND VERFAHREN ZUR UMGEBUNGSÜBERWACHUNG VON PRÄZIPITATIONSEREIGNISSEN

SYSTÈME ET PROCÉDÉ DE SURVEILLANCE ENVIRONNEMENTALE D'ÉVÉNEMENTS DE PRÉCIPITATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.11.2016 IT 201600115696**

(43) Date of publication of application:
**25.09.2019 Bulletin 2019/39**

(73) Proprietors:
• **Artys S.R.L.**
  **16121 Genova (IT)**
• **Universita' degli Studi di Genova**
  **16126 Genova (IT)**

(72) Inventors:
• **CARIDI, Andrea**
  **16133 Genova (GE) (IT)**
• **CAVIGLIA, Daniele**
  **16146 Genova (GE) (IT)**
• **DELUCCHI, Alessandro**
  **16166 Genova (GE) (IT)**
• **MONTECUCCO, Claudio**
  **15069 Serravalle Scrivia (AL) (IT)**
• **PASTORINO, Matteo**
  **16010 Rossiglione (GE) (IT)**
• **RANDAZZO, Andrea**
  **17100 Savona (SV) (IT)**
• **SGUERSO, Domenico**
  **17000 Savona (SV) (IT)**

(74) Representative: **Bottino, Giovanni**
  **ARBO Srl**
  **Via Colombo, 11/29**
  **16121 Genova (IT)**

(56) References cited:
**EP-A1- 2 688 223**

**Description**

The present invention relates to the field of environmental monitoring systems and methods usually used for preventing environmental disasters from occurring, such as for example floods, landslides, landslips, caused by intense precipitation events such as rain, hail, snow.

Patent Application EP-A-2688223 of the same inventors describes a system for the environmental monitoring in which the precipitation intensity is determined along a path between a transmitter placed on a satellite and a receiver, by measuring the attenuation which the electromagnetic radiation transmitted along said path has been subjected to.

Such a system, although excellent in fulfilling its function, however is not able to give space-time relevance to the precipitation datum. This system is able to provide a datum of integral type, i.e. related to the average of precipitations on the path connecting each single receiving antenna to the transmitting antenna, if the latter is also within the volume affected by the precipitations, i.e. the path connecting each single receiving antenna to the intercept of the segment joining the latter with the transmitter and the surface located at the freezing level from which the precipitation begins to form. This happens for example when the transmitting antenna is placed on a satellite.

On the other hand, climatic changes that have been witnessed in recent years, which cause hydrogeological warnings due to sudden and abundant precipitating phenomena, require more and more accurate and punctual environmental monitoring in order to avoid dangerous situations for the population.

The above-mentioned document fails to disclose how to obtain a high-definition space-time representation of the precipitation phenomenon.

Therefore, there is a need unsolved by the prior art to precisely identify the weather conditions in space and time, for example by using hydrogeological models relating the extent of the precipitation phenomenon to the environmental and hydrogeological risk represented by the phenomenon with respect to the site where it is located.

Object of the present invention is to at least partially solve this drawback by means of a simple, inexpensive improvement of known systems.

The object of the invention is achieved by an environmental monitoring system for precipitation events, according to Claim 1.

By processing data from multiple pairs of antennas, high-definition space-time representation of the precipitation phenomenon can be provided and, therefore, alert conditions can be precisely identified in space and time, for example by using hydrogeological models relating the extent of the precipitation phenomenon to the environmental and hydrogeological risk represented by the phenomenon with respect to the site where it is located.

Advantageously, in fact, the central unit of the system is adapted to discretize the observation zone in subzones, also called rainxels in the present description, which are given a value associated with the precipitation intensity in that particular sub-zone based on the information about the radio signal attenuation of measuring unit/microwave transmitter pairs identifying directions crossing each sub-zone.

The greater the number and density of the detection directions with respect to the observation zone, the greater the amount of data that can be collected there; as a result, a better spatial resolution can be achieved, resulting in greater accuracy in estimating the precipitation event.

According to an embodiment, the central unit can be advantageously configured to calculate the gradient of the spatial movement of the precipitation event as a function of time and estimate future time-trends of the event by using a database containing historical information about the trend of precipitation events in the observation zone as a function of said gradient.

More generally, the central unit may comprise a program memory containing code lines of an electronic model of a territory to be monitored. If the model includes data relating the extent of the precipitation phenomenon and environmental and/or hydrogeological risk with respect to the site where the phenomenon is located, the processor unit is able to calculate an environmental and/or hydrogeological risk of the observation zone based on the information contained in the electronic model of the territory and the data transmitted by the remote measuring unit or units, thus providing obvious benefits for the population.

According to a particularly advantageous embodiment, the central unit has one or more inputs to receive further meteorological data of the observation zone such as wind, humidity, temperature, pressure, rainfall fields or the like, extracted or calculated by other systems. Therefore, the processor unit can be configured to process this additional data in order to increase the ability to identify weather conditions in the observation zone and to forecast how weather conditions will evolve in the same zone and/or in a zone more extended with respect to the observation zone, thereby further increasing the level of reliability of the monitoring.

In addition, a part of the receiving unit can be exploited to simulate the scanning of a weather radar, for example by sequentially activating or receiving data from units distributed in a preferential direction.

Having, at the same point, a plurality of antennas oriented towards different transmitters, a radial representation of the space (and in particular of the precipitation) facing the antennas is obtained: this representation is thus characterized by geometry somewhat similar to that obtainable from a weather radar (especially of a short-range type) arranged at the same point.

The invention further relates to a method for the environmental monitoring of precipitation events in which:

- a plurality of radio signals transmitted by one or more microwave transmitters are received by one or more receivers,
- per each received signal, the coming direction of said signal, the length of the path traveled by the signal from the microwave transmitter or from a reference height up to the receiver, and the attenuation the signal has been subjected to with respect to a reference condition, such as absence of precipitation, are determined,

- an observation zone is defined;
- said observation zone is discretized in sub-zones or rainxels,
- the sub-zones crossed by the same signal are identified,
- the rain rate, or a parameter associated with the rain rate in each sub-zone, is calculated starting from the total attenuations each signal has been subjected to in the various receiving directions subtended by rainxel groups.

Further characteristics and improvements are object of the sub-claims.

The characteristics of the invention and the advantages descending therefrom will become more apparent from the following detailed description of the accompanying drawings, in which:

Fig. 1 shows a schematic view of an arrangement with two microwave transmitters and three measuring units.

Fig. 2 shows an example of a pair of antennas for a transmitter-receiver system. The case of a satellite signal system shows the transmitter and its antenna placed aboard a satellite.

Fig. 3 shows the conceptual diagram of a system for estimating the precipitation intensity along the path between a microwave transmitter and a receiving antenna in case the height, at which precipitation starts, is intermediate between the heights of the two antennas.

Fig. 4 shows an exemplary schematic view of the spatial discretization of the observation zone for calculating the precipitation intensity according to an aspect of the invention.

Fig. 5 shows the exemplary case of 9 rainxels and a single transmitter/receiver path.

Fig. 6 schematically shows a monitoring system according to an embodiment of the present invention.

Fig. 7 shows a block diagram of a measuring unit used in the system of Fig. 6.

Fig. 8 shows a block diagram of the central system of figure 6.

Fig. 9 is a flow diagram of a monitoring method according to the present invention.

Figures 10a and 10b show two flow diagrams of two alternative embodiments of a monitoring method according to the present invention. Figure 11 shows a block diagram of a measuring unit according to an embodiment alternative to that of figure 6.

Figure 12 is a flow diagram of a monitoring method alternative to that of figure 10b;

Figures 13a and 13b schematically show the reception of a satellite radio signal by a measuring unit of the system according to this embodiment variation and the calculation of the rainfall positioning on the territory.

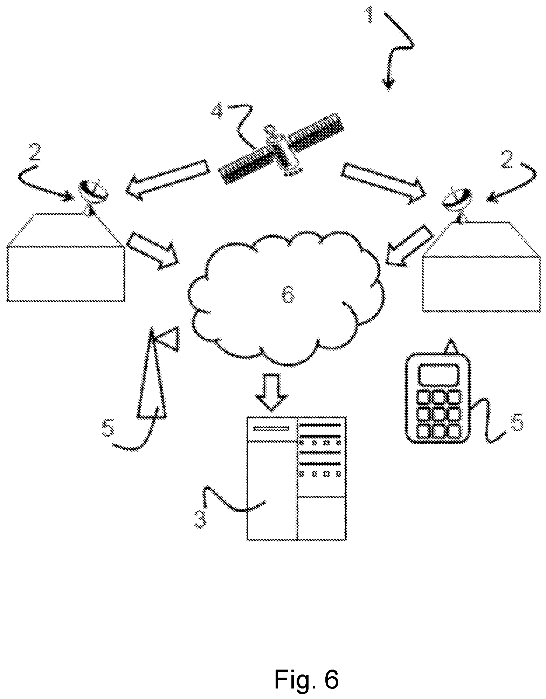

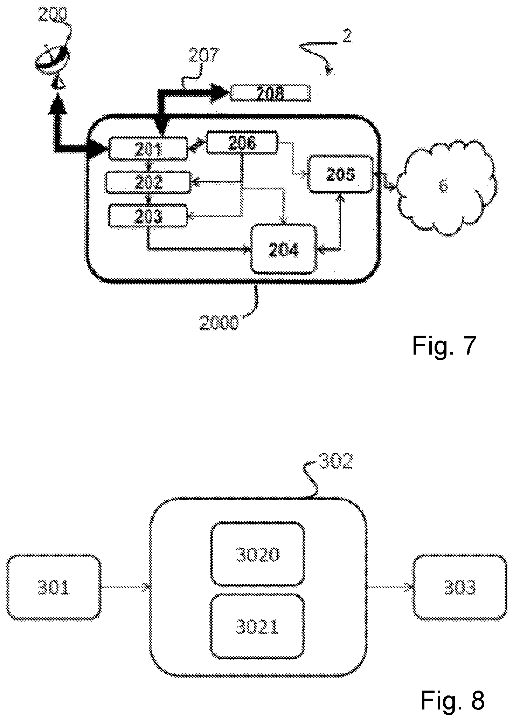

Referring to figures 6 and 7, the system according to an embodiment of the invention comprises a plurality of remote measuring units 2 in communication with a central system 3. The measuring units, better detailed below, receive a radio signal from one or more microwave transmitters 4 and measure the power of the electrical signal generated as a response to the reception of electromagnetic waves constituting the transmitted radio signal. In the preferred embodiment described below, the microwaves transmitters 4 transmit microwave signals in the SHF band (3 to 30 GHz), and more preferably signals with a frequency ranging from 5 to 20 GHz, which are sensitive to the presence of water in the troposphere. For example, microwave transmitters 4 are placed aboard satellites and transmit commercial television signals, thus allowing, as it can be seen below, a low-cost widespread monitoring system to be made by using facilities already existing for other purposes.

The measured power value is therefore transferred to the central system 3 which processes the datum and decides whether sending alarm signals to remote alarm units 5 for warning people about an environmental risk. Preferred, but not limitative, embodiments of the alarm units can be alarm offices (for example a police station), alarm sirens, mobile phones or other devices able to generate a local (audible or visual) alarm signal. In particular, in a preferred embodiment, the central system warns the population of a territory at risk by sending text messages, for example SMS or MMS; however other solutions, such as sending e-mails and other type of messages, are possible. As an alternative, alarm messages can be sent to all the mobile phone providers which in turn send specific messages to their users. The same communication channel can also be exploited with the remote measuring units 2 in order to provide warning indications to the users of said units.

The central system may also carry out only precipitation measurements and delegate to third parties the possibility of sending alerts to the population. For example, the central system can supply real-time data about precipitations in a given zone to a Civil Protection office that will handle the potential alert. Using the same remote measuring units to send users of said units the same information, or part of them, about precipitations in a particular weather observation zone, is particularly advantageous.

Going into the details of the measuring units 2, in the preferred embodiment shown with reference to figure 7, they comprise one or more antennas 200 and a measuring device 2000.

The measuring device 2000 comprises a RF connector 201 for the connection to a radiofrequency line transporting the signal from the antenna 200. The connector 201 therefore allows the electrical signal output from the antenna 200 to be received.

A RF filter 202, placed in series with the RF connector 201, filters the signal received in a particular band and passes it to a module 203 that detects the power of the signal received within such band. The module 203 provides the value of the measured power to a processor 204 that processes it and generates a data packet ready to be received and transmitted by a network interface 205.

In the preferred embodiment, the transmitted data packet comprises both the value of the measured power and a piece of information about the microwave transmitter that transmitted the radio signal, as well as a piece of information about the position or identification of the measuring unit 2. This information, as better disclosed hereafter, combined with information coming from other measuring units, allows the central system to detect the intensity of precipitations in an observation zone.

In the preferred embodiment the network interface 205 comprises a UMTS (Universal Mobile Telecommunication System) or GPRS (General Packet Radio Service) or HSDPA (High Speed Downlink Packet Access) or LTE (Long Term Evolution) modem, or other systems for transmitting data packets through a telecommunications network. In another embodiment, the network interface 205 is an Ethernet interface or WiFi interface or an interface of any other known type allowing data to be sent through a communication network, in particular the Internet. Preferably, the measuring units 2 are inserted in a SOS network (Sensor Observation Service) of a GIS system (Geographical Information System) and therefore they have a corresponding network interface 205.

The power supply of the several electronic components of the measuring device 2000 is guaranteed by a power supply module 206. In the embodiment of figure 8, the power supply module 206 is arranged so as to drain a voltage from a network cable or communication line. For example the module 206 can be structured to be connected to a coaxial cable 207 of an antenna system, for example a MATV system (Master Antenna TV) delivering data and power supply to the LNB of the satellite antenna, for example by DiSEqC protocol (Digital Satellite Equipment Control). In addition or as an alternative to the cabled power supply, the module 206 can be arranged for taking a supply voltage from an electricity network or battery.

In the example of figure 7, in order to drain the supply voltage from the coaxial cable 207, the power-supply module 206 is connected to the connector 201 that makes both the connection with the antenna 200 and the connection with the cable 207, thus allowing signals to be taken from and inserted on the cable 207.

Therefore in this embodiment, through the connector 201, the signal received from the antenna 200 can be taken in order to measure its power through the modules 202 and 203, a supply voltage can be drained from the cable 207 and the signal received from the antenna 200 can be inserted into the cable 207 and sent to a further receiver 208.

The power supply module 206 additionally comprises a converter able to provide one or more output voltages for supplying several components of the measuring device 201.

The measuring unit 2 described above therefore allows the power of a signal transmitted by one or more transmitter to be detected. If the transmitters are placed aboard satellites for commercial broadcasting, signals used for other purposes, in particular for satellite TV, can be exploited. Not only does this allow parts of networks and systems already available for other purposes to be used with obvious cost savings, but it also allows very detailed, continuous and low-cost monitoring to be carried out by exploiting a large number of receivers variously arranged on the territory, and thus multiple transmitter/measuring unit directions.

The central system or unit 3 receives and processes the data received from the different measuring units 2. Referring to fig. 8, the central system 3 comprises a receiver 301 able to receive the datum transmitted from the measuring unit 2 and to transmit it to a control unit 302. The latter comprises a processor 3020 and a non-volatile program memory 3021.

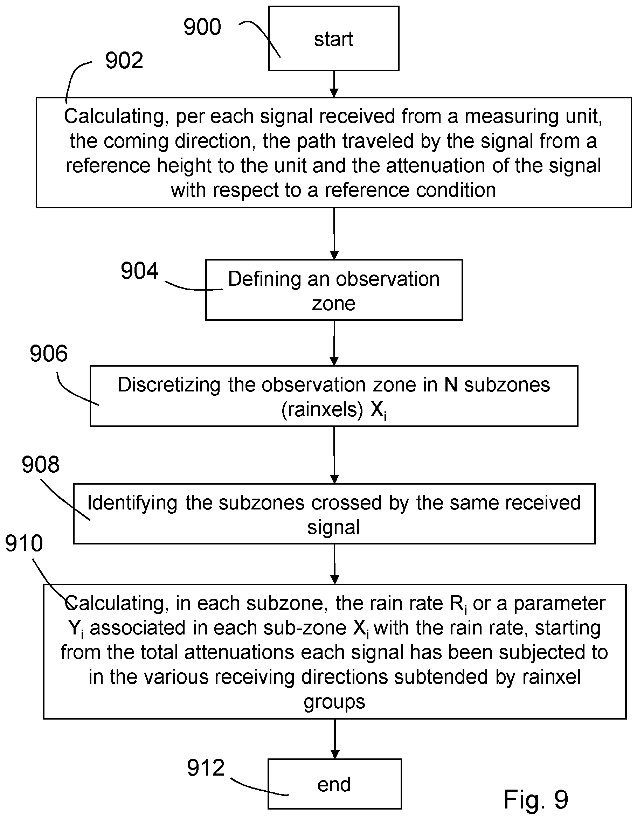

The processor 3020 runs a code stored in the memory 3021 that allows the method described below with reference to figure 9 to be carried out for monitoring a territory.

The method starts at step 900, when the processor receives data packets from the receiver 301.

Next, at step 902, per each signal received by a measuring unit m from a transmitter v, the processor calculates:

- m-v denotes the coming direction of the signals from the transmitter v to the measuring unit m, otherwise denoted as origin direction of signals;
- the length of the path $l_{m,v}$ the signal traveled from the transmitter or a reference height $h_R$, typically at the 0°C isothermal line, to the measuring unit.

- the signal attenuation $p_{m,v}^{dB}$ with respect to a reference condition $p_{m,v}^{0,dB}$. For example, the reference condition is the power received in the absence of precipitation events, but surely it may be any other power condition at a known event. The superscript dB indicates that powers are expressed in dB, but of course a value expressed in any one unit of measurement can be used.

The coming m-v direction and the length of the path $l_{m,v}$ are calculated by the processor once the positions of the measuring unit m and the transmitter v from which the former received the signal are known. For this purpose, this position information is transferred from the measuring unit to the central unit 2 together with the power information of the received signal. Alternatively, these calculations are carried out by the same measuring units and the parameters are transferred directly to the central unit 2 which therefore receives them as input data. The position information of the measuring units can be detected, for example, by a GPS associated with them. The measuring units can also be identified by codes transferred to the central unit, which advantageously contains transcoding tables to associate the positions of the remote units 2 with their respective identification codes.

The calculation of the attenuation $p_{m,v}^{0,dB} - p_{m,v}^{dB}$ is advantageously carried out by the processor of the central unit 3, but it can also be a parameter calculated by the remote unit 2 itself and transferred to the central unit 2, as the previous parameters.

At this point, step 904 is provided to define an observation zone and to discretize said observation zone in N sub-zones $X_i$ called rainxels (906). Obviously, this may also happen before the previous step or it may be an input datum of the system. Advantageously, the number of discretizations and/or the size of the observation zone can be adaptively varied based on the number and directions determined by the pairs of measuring unit m and transmitter v, so that as to allow the precipitation amounts to be estimated for at least part of the rainxels of the observation zone.

At step 908, the processor identifies the sub-zones or rainxels crossed by the same signal and calculates the rain rate $R_i$ or a parameter $Y_i$ associated with the rain intensity in each sub-zone $X_i$ starting from the total attenuations each signal has been subjected to in the various receiving directions subtended by the rainxel groups 910.

The process ends at step 912 in which what calculated for each rainxel in the observation zone is output.

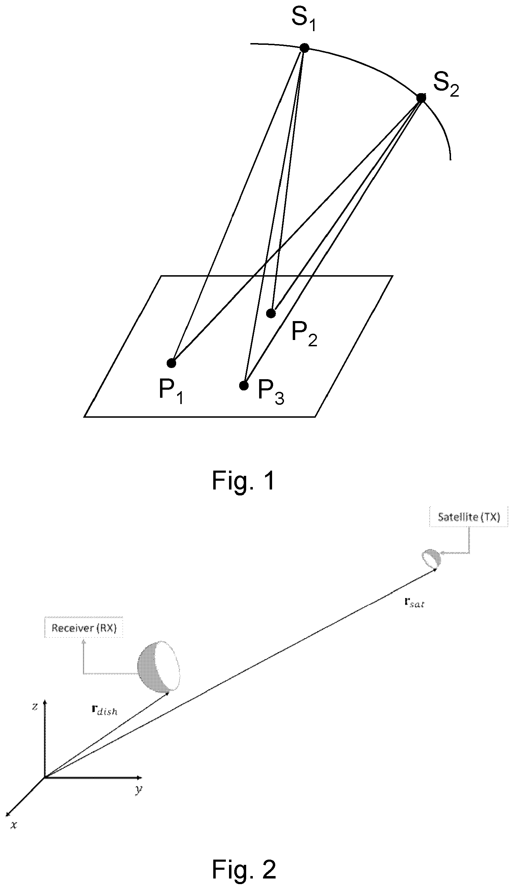

The operating modes of the processor to estimate the precipitation intensity are explained below with reference to figures 1 to 5.

It should be considered a set of microwave transmitters V placed for example on geostationary satellites for commercial broadcasting services or broadcasting stations specially installed on the territory (Fig. 1). Their position, with respect to a reference system integral with the Earth, is depicted by Sv, with v = 1, 2, ... V.

The electromagnetic waves generated by the transmitters v are received by antennas of the measuring units m of a set of measuring units M. The antennas are positioned at $P_m$, with m = 1, 2, ... M. In particular, it is assumed that the m-th measuring unit is able to receive the signals transmitted by a subset of transmitters $V_m$. As a result, the total number of links is:

$$0 \le \sum_{m=1}^{M} V_m \le MV$$

Given the frequencies used and the sizes of the inspected regions, a set of microwave transmitters V placed for example on geostationary satellites, the electromagnetic field incident on the receiving antenna can be modeled as a flat wave, that is to say

$$E_v(p_m) = E_p(p_m, s_v) \cdot e^{-j\beta|p_m - s_v|} p_v$$

with m = 1, ..., M; v = 1, ..., V

where $p_v$ is the unit vector depicting the polarization of the electromagnetic field generated by the transmitter v, $E_p$ is the (complex) amplitude of the signal generated by the transmitter (linked to the power of the transmitted signal, to the radiation pattern of the transmitting antenna and the distance of receiving antenna - transmitting antenna) and $\beta_{m,v} = b - ja_{m,v}$ is the propagation constant.

The power available at the receiver is

$$p_{m,v} = \frac{A_m^{eff}}{2\eta}\left|E_p\left(p_m,s_v\right)\right|^2 e^{-2a_{m,v}l_{m,v}} = p_{m,v}^0 e^{-2a_{m,v}l_{m,v}}$$

where $A_m^{eff}$ is the effective area of the antenna and $\eta$ is the characteristic impedance of the medium in which the propagation takes place. The amount

$$L_{m,v} = e^{2a_{m,v}l_{m,v}} = \frac{p_{m,v}^0}{p_{m,v}} \quad (1)$$

is the attenuation the electromagnetic field has been subjected to. This attenuation is related to the characteristics of the medium in which propagation takes place. Specifically, as regards what herein involved, it can be related to the intensity of a precipitation dropping away over the path the electromagnetic wave traveled during the transmitter-receiver route. To characterize this relationship, reference is made to the model contained in Recommendation ITU P.838, Sept. 2013, in which the attenuation is modeled as

$$L_{m,v}^{dB} = \gamma_{m,v}^{dBkm} \cdot l_{m,v}^{km} \quad (2)$$

where $l_{m,v}^{km}$ is the length of the path in km and $\gamma_{m,v}^{dBkm}$ is the specific attenuation in dB/km which depends on the rain rate $R_{m,v}$ expressed in mm/h, by means of the following relationship

$$\gamma_{m,v}^{dBkm} = k_{m,v} \cdot R_{m,v}^{\alpha_{m,v}} \quad (3)$$

where $k_{m,v}$ and $\alpha_{m,v}$ are two coefficients dependent on frequency and polarization and the superscript dBkm denotes that the attenuation is expressed in dB/km.

The result of expressing (1) in dB and solving (2) for $\gamma_{m,v}^{dBkm}$, is

$$\gamma_{m,v}^{dBkm} = \frac{p_{m,v}^{0,dB} - p_{m,v}^{dB}}{l_{m,v}^{km}}$$

that, by inserting it in (3),

$$R_{m,v}^{\alpha_{m,v}} = \frac{p_{m,v}^{0,dB} - p_{m,v}^{dB}}{k_{m,v} \cdot l_{m,v}^{km}} \quad (4)$$

is obtained.

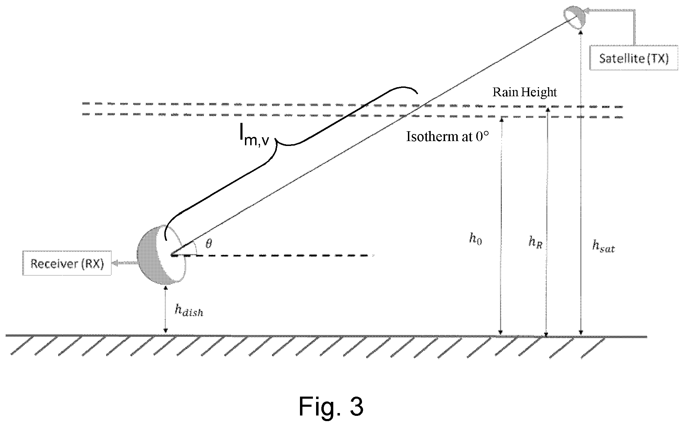

It should be noted that this model assumes that attenuation is constant along the path affected by precipitations, and null elsewhere. In particular since precipitations, especially rain, originate from a height $h_R$ above sea level, what is relevant is the fraction of the path between the receiving antenna and that height, as schematically shown in Fig. 3. Clearly, this path coincides with the path between receiver and transmitter in case the latter is placed at a height lower than $h_R$.

The length of the path portion that can be affected by precipitation phenomena can be obtained from the knowledge of $h_R$, by geometric reasoning. In particular, it turns out

$$l^{km}_{m,v} = \frac{h_R - h_{m,v}}{\sin \theta_{m,v}}$$

where $\theta_{m,v}$ is the elevation of the paraboloid with respect to the ground. The quantity $h_R$ can be obtained by weather measurements or by models such as that provided by ITU P.839-4.

Based on the previously described model, intensity of the precipitation phenomena along the receiving antenna m - transmitter v path can be extrapolated by reversing (4), i.e. through the following relationship

$$R_{m,v} = \alpha_{m,v} \sqrt{\frac{p^{0,dB}_{m,v} - p^{dB}_{m,v}}{k_{m,v} \cdot l^{km}_{m,v}}} \qquad (5)$$

In the present invention, the previous model is extended to the case of variable attenuation along the individual paths. In particular, the attenuation the wave has been subjected to is generalized as follows

$$p^{0,dB}_{m,v} - p^{dB}_{m,v} = L^{dB}_{m,v} = \int_{l_{m,v}} \gamma^{dBkm}_{m,v}(r) \cdot dr = \int_{l_{m,v}} k_{m,v} \cdot R^{\alpha_{m,v}}_{m,v}(r) \cdot dr$$

where $R_{m,v}(r)$ is the rain rate in a generic point r within the volume of space between the ground and the starting height of precipitations and the integral is made along the line linking the v-th transmitter with the m-th antenna. It should be noted that this model assumes that the involved quantities are stationary.

By suitably discretizing the observation zone, starting from measures of $p^{dB}_{m,v}$ along all the paths (i.e. for m = 1, ..., M and v = 1, ..., V), the values of R (r), namely the precipitation intensity in given spatial points however arranged with respect to the transmitter/receiver paths, can be extrapolated.

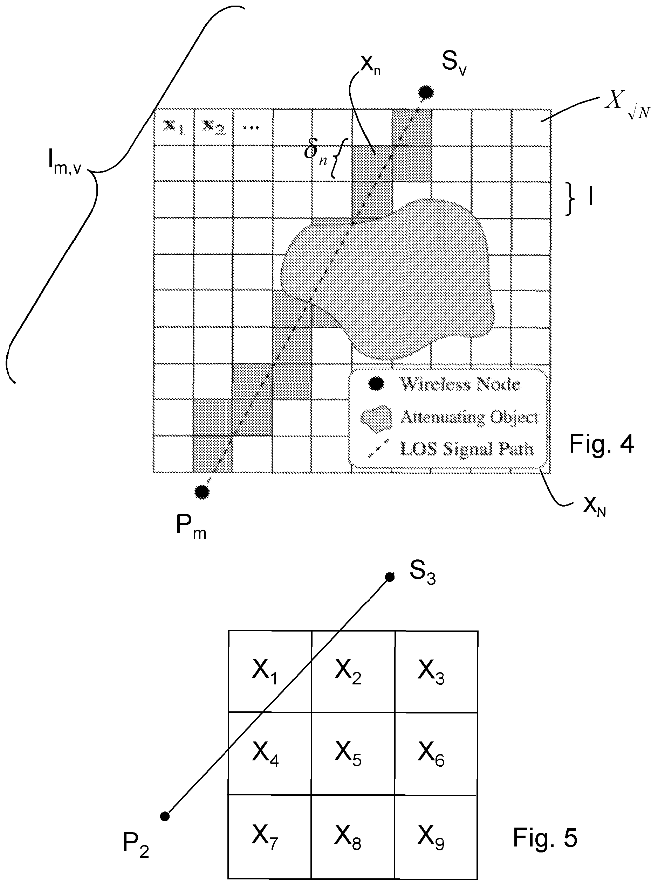

In order to better understand this aspect, the schematic representation shown in Fig. 4 should be considered, by way of example.

The examined region is discretized in N subdomains $X_i$ having center $r_i$ and side 1. Each subdomain, also called "rainxel", has a rain rate value $R_i = R (r_i)$ associated therewith. Once fixed m and v, i.e. per each transmitter/receiver pair, the power received can be expressed as a function of the rainxels included in the path, as

$$p^{0,dB}_{m,v} - p^{dB}_{m,v} = L^{dB}_{m,v} = \int_{l_{m,v}} k_{m,v} \cdot R^{\alpha_{m,v}}_{m,v}(r) \cdot dr = k_{m,v} \sum_{n \in \Gamma_{m,v}} R^{\alpha_{m,v}}_n \delta_n$$

where $\Gamma_{m,v}$ is the set of rainxel indexes within the path $l_{m,v}$ and $\delta_n$ is the distance traveled within the rainxel n. In practice, this relationship is a generalization of (4), considering a variable attenuation along the path $l_{m,v}$.

Assuming that $k_{m,v}$ and $\alpha_{m,v}$ are constant on the various paths and $\delta_n$ is constant, the summation can be written as

$$p^{0,dB}_{m,v} - p^{dB}_{m,v} = \sum_{i \in \Gamma_{m,v}} Y_i$$

with

$$Y_i = k_{m,v} \cdot R^{\alpha_{m,v}}_i \cdot \delta_i \qquad (6)$$

from which the following system is obtained

$$
\begin{bmatrix} p_{1,1}^{0,dB} - p_{1,1}^{dB} \\ p_{1,2}^{0,dB} - p_{1,2}^{dB} \\ \ldots\ldots \\ p_{M,V}^{0,dB} - p_{M,V}^{dB} \end{bmatrix} = \mathbf{W} \begin{bmatrix} Y_1 \\ Y_2 \\ \ldots\ldots \\ Y_N \end{bmatrix} = \begin{bmatrix} \mathbf{w}_{1,1}^{t} \\ \mathbf{w}_{1,2}^{t} \\ \ldots\ldots \\ \mathbf{w}_{M,V}^{t} \end{bmatrix} \begin{bmatrix} Y_1 \\ Y_2 \\ \ldots\ldots \\ Y_N \end{bmatrix}
$$

$$(7)$$

where $p_{m,v}^{0,dB} - p_{m,v}^{dB}$ is the attenuation, expressed in dB, the signal has been subjected to with respect to a reference condition, such as absence of precipitations, in the m-v path identified by the measuring unit m / transmitter v pair,

$\mathbf{w}_{m,v}^{t}$ is the row vector of N elements whose i-th element value is either "1", if the i-th rainxel is in the m-v path, or else "0".

The system (7) can be solved to obtain the Y vector and, as a result, the rain rate $R_i$ in each rainxel $X_i$.

To better understand how the windowing of data w works, fig. 5 should be considered, which refers to the case of N = 9 rainxels and a single path 2-3 affecting the rainxels 1, 2 and 4. In this case the vector $\mathbf{w}_{2,3}^{t}$ will contain the 9 values

$$
\mathbf{w}_{2,3}^{t} = \begin{pmatrix} 1 & 1 & 0 & 1 & 0 & 0 & 0 & 0 & 0 \end{pmatrix}
$$

By operating the same procedure for each m-v path, the entire array W is populated thus obtaining a linear system in N unknowns $Y_i$. The constant terms are the attenuations the signal has been subjected to in each m-v path. If the hypothesis of $k_{m,v}$, $\alpha_{m,v}$ and $\delta_n$ constant cannot be applied, the reverse problem can be formulated as follows

$$
\begin{bmatrix} p_{1,1}^{0,dB} - p_{1,1}^{dB} \\ p_{1,2}^{0,dB} - p_{1,2}^{dB} \\ \ldots\ldots \\ p_{M,V}^{0,dB} - p_{M,V}^{dB} \end{bmatrix} = \begin{bmatrix} k_{1,1} \sum_{n=1}^{N} w'_{1,1,n} R_n^{\alpha_{1,1}} \delta_n \\ k_{1,2} \sum_{n=1}^{N} w'_{1,2,n} R_n^{\alpha_{1,2}} \delta_n \\ \ldots\ldots \\ k_{M,V} \sum_{n=1}^{N} w'_{M,V,n} R_n^{\alpha_{M,V}} \delta_n \end{bmatrix}
$$

$$(8)$$

where $p_{m,v}^{0,dB} - p_{m,v}^{dB}$ is the attenuation, expressed in dB, the signal has been subjected to with respect to a reference condition, such as absence of precipitations, in the m-v path identified by the measuring unit m / transmitter v pair, $w_{m,v,n}$ is a vector whose value is either "1", if the n-th rainxel is in the m-v path, or else "0", $\delta_n$ is the distance traveled by the signal in the rainxel $X_n$ belonging to the m-v path.

To derive the $R_i$ from (8) any inversion technique for non-linear problem resolution may be used, for example based on a Newton iterative scheme.

Once the precipitation data are obtained, typically in mm/h, for each rainxel in the observation zone a map of precipitations in the zone can be constructed.

The same processor, or another one, of the central unit 2 or another unit operatively connected to the latter, can be advantageously configured to calculate the gradient of the spatial movement of the precipitation event as a function of time and to estimate future time-trends of the event by using a database containing historical information about the trend of precipitation events in the observation zone as a function of said gradient.

More generally, the central unit may comprise a program memory containing code lines of an electronic model of a territory to be monitored. If the model includes data relating the extent of the precipitation phenomenon and environmental and/or hydrogeological risk with respect to the site where the phenomenon is located, the processor unit is able to calculate an environmental and/or hydrogeological risk of the observation zone based on the information contained in the electronic model of the territory and the data transmitted by the remote measuring unit or units, thus providing obvious benefits for the population.

According to a particularly advantageous embodiment, the central unit has one or more inputs to receive further meteorological data of the observation zone such as wind, humidity, temperature, pressure, rainfall fields or the like, extracted or calculated by other systems, such as for example GNSS. Therefore, the processor unit can be configured to process this additional data in order to increase the ability to identify weather conditions in the observation zone and to forecast how weather conditions will evolve in the same zone and/or in a zone more extended with respect to the observation zone, thereby further increasing the level of reliability of the monitoring.

In addition, a part of the receiving units can be exploited to simulate a scanning, for example by sequentially activating/receiving data from units distributed in a preferential direction. Thanks to the high spatial resolution of the system according to the invention, in this way, real-time information can be obtained for the territory where the receiving antennas are deployed, the receiving antennas being of the same type as those provided by the much more complex and expensive weather radars.

According to a further embodiment of the invention, the environmental monitoring system consists of a central system and a plurality of remote measuring units operatively connected to the central system. Each remote measuring unit comprises a receiver that receives a radio signal transmitted by a satellite and measures the power of an electrical signal generated by the reception of the radio signal. The unit then comprises a transmitter for transmitting to the central system a datum associated with the measured power along with information about the transmitting satellite and the measuring unit itself. The central system comprises in turn a receiver to receive the data transmitted by the remote measuring units, and a processor unit operatively connected to the receiver and configured so as to calculate, on the basis of the data transmitted from the measuring units, the trajectories of the radio signals received from the measuring units, the intensity and position on the territory of atmospheric phenomena that attenuate the radio signals received from said plurality of measuring units.

An embodiment variation provides that the above said environmental monitoring system comprises a central system and a plurality of remote measuring units operatively connected to the central system 3, in which each remote measuring unit 2 comprises

> a receiver 200-203 adapted to receive a radio signal transmitted by a satellite 4 and to measure the power of an electrical signal generated by the reception of the radio signal,
> a transmitting system 205 to transmit to the central system a datum associated with the measured power, a piece of information about said satellite and a piece of information about the measuring unit,
> and wherein the central system 3 comprises
> a receiver 301 for receiving data transmitted by the remote measuring units,
> a processor unit 3020 operatively connected to the receiver 301 for calculating, on the basis of the data transmitted by the remote measuring units 2, the trajectories of the radio signals received from the measuring units, the intensity and position on the territory of atmospheric phenomena that attenuate the radio signals received from said plurality of measuring units.

An additional embodiment provides that at least one measuring unit of said plurality comprises a receiver adapted to receive a radio signal in the SHF band, and wherein the processor unit is adapted to calculate the rain rate and position attenuating the radio signal in SHF band.

Still according to a further characteristic, at least one measuring unit of said plurality comprises a receiver adapted to receive radio signals having frequencies between 1 and 2 GHz, in particular GNSS signals, and wherein the processor unit is adapted to calculate the water vapor position that attenuates and/or delays the received radio signal having frequency between 1 and 2 GHz.

Preferably, the radio receiver adapted to receive radio signals having frequency between 1 and 2 GHz is a GNSS receiver able to detect a position of the receiver itself, and wherein the measuring unit is adapted to transmit the detected position to said central system.

An embodiment of the invention provides that the central system further comprises a program memory 3021 containing code lines of an electronic model of a territory to be monitored, the model including data relating to the orography of the territory, and wherein the processor unit is adapted to calculate, based on the information contained in the electronic model of the territory and the data transmitted by the remote measuring units 2, an environmental risk for that territory, the environmental risk being a risk originated by atmospheric precipitations.

In an embodiment, the central system is adapted to calculate a signal path affected by precipitations and calculate the rain rate according to the following formula:

$$R = \sqrt[\alpha]{\frac{a_r}{k}} \qquad\qquad (1)$$

where R is the intensity of precipitation (e.g. rain) in mm/h, k and $\alpha$ are constants selected depending on the position of the territory and the frequency and polarization of the satellite signal, $a_r$ is the specific attenuation calculated for the received radio signal, said specific attenuation being calculated by dividing the ratio (expressed in dB) of the power of the measured electrical signal to a reference power measured for an electrical signal generated in response to the reception of a radio signal transmitted by the same satellite under good weather conditions, by the length of the path affected by precipitations. According to still another embodiment, the central system further includes transmission means for transmitting alarm signals to at least one remote alarm unit located in an area of the territory where the environmental risk calculated by the processor unit exceeds a threshold value.

In a further embodiment, at least one measuring unit of said plurality is connected to a home television system and wherein the electrical signal, whose power is measured, is the signal transmitted by an antenna of the television system to a home television receiver.

The above mentioned embodiments of the system are adapted to carry out the steps of a method for monitoring the territory which, in a most general first embodiment, provides the following steps:

receiving, at different points of the territory, a plurality of radio signals transmitted by at least one satellite, per each radio signal received from a specific satellite

- calculating a length of a radio signal path affected by atmospheric precipitations,
- measuring the power of an electrical signal generated by the reception of the radio signal,
- calculating a ratio of the measured power to a reference value, said reference value being a measure of the power of a corresponding electrical signal generated by the reception of a radio signal transmitted by the same satellite under good weather conditions,
- starting from said ratio and said length of a path, estimating the intensity and position of precipitations by which it was attenuated with respect to good weather conditions,
- on the basis of information about the intensity and position of the precipitation events by which said plurality of received radio signals were attenuated, generating a map of the precipitations.

The invention refers also to a satellite television receiver, comprising an antenna input for the connection to an antenna adapted to receive satellite television signals, means operatively connected to the antenna input for decoding the electrical signals at said antenna input, the receiver being characterized in that it further comprises means for measuring the power of an electrical signal at said antenna input and means for transmitting to a remote device 3 a datum associated with said measure.

The above described embodiments, in which television or GNSS signals are received, are particularly advantageous because they allow a low-cost monitoring network to be implemented by at least partially exploiting already existing systems and devices.

The use of the GNSS receiver, in case of a different type with respect to the one required for the aforementioned evaluations, allows up-to-date information on the position of the measuring unit to be obtained, thereby allowing, as will be seen, the trajectory of the satellite radio signal to be correctly derived and the position and movement of the hydrometeor to be correctly calculated.

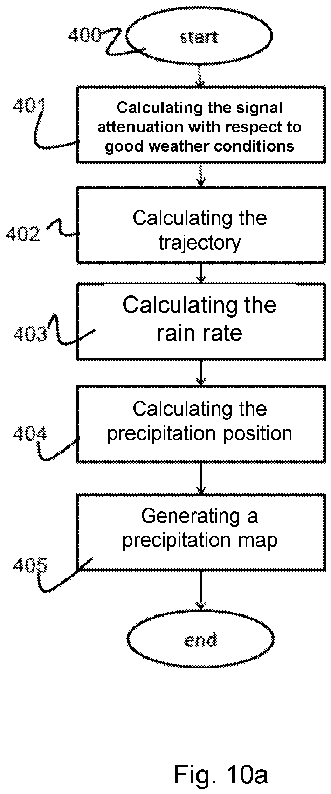

Figure 10a is a flow diagram of a further embodiment of the method according to the present invention.

The method starts at step 400, when the processor receives data packets from the receiver 301.

Subsequently, at step 401, the processor extracts the datum related to the measure of the power of the signal received from a measuring unit and compares it with a reference value corresponding to a power measurement of a corresponding signal received from the same measuring unit in good weather conditions. In an embodiment, the reference value to be compared with the measure is inserted during the set-up step of the system and periodically updated manually or automatically, remotely or locally on the site where the measuring unit is placed.

Starting from the comparison between the power measured by the measuring unit and the reference value, the processor 3020 calculates a signal attenuation that is related to the precipitation intensity.

Subsequently, or through a process (thread) executed in parallel, the processor 3020 uses the data related to the transmitting satellite and the receiving unit to calculate (step 402) the trajectory of the satellite signal whose power measure has been received.

To calculate the trajectory of the satellite radio signal, the positions of the satellite and the measuring unit are needed. This information can be transmitted by the measuring unit to the central system, but can also be determined at the central system from other information transmitted by the measuring units. If the measuring units are fixed, for example due to their connection to a home television system, the central system saves their positions and respective identifiers, so that when it receives a signal from a measuring unit, the position thereof can be extrapolated through a comparison table (look-up table). The central system can know the satellite positions without needing the transmission thereof. If the system exploits commercial television signals, the satellites are of a geostationary type and therefore, as above mentioned for the measuring units, if the transmitting satellite is known, its position can be obtained through a comparison table 5 (look-up table).

Starting from the attenuation and trajectory calculated in the previous steps, the rain rate is estimated (step 403) according to the following formula:

$$R = \sqrt[\alpha]{\frac{a_r}{k}} \quad (1)$$

Where $a_r$ is the specific attenuation (dB/Km) of the received radio signal calculated by dividing the ratio (expressed in dB) of the power of the measured electrical signal to a reference power measured for an electrical signal generated in response to the reception of a radio signal transmitted by the same satellite under good weather conditions, by the length of the path affected by precipitations. R is the precipitation intensity (e.g. rain) in mm/h, the two parameters k and $\alpha$ are functions of the climatic zones (latitude and longitude of the ground station) as well as of the frequency and polarization of the electromagnetic wave. These parameters are specified in Recommendation ITU-R P.838.

In the preferred embodiment, the precipitation intensity in a given territory is therefore calculated (step 402 of the method) starting from the precipitation intensities calculated by the formula (1) starting from electrical signals generated by the reception of radio signals, which are received from several measuring units and have trajectories passing through a given portion of the atmosphere.

Then, at step 404, the positions of the atmospheric precipitations are estimated.

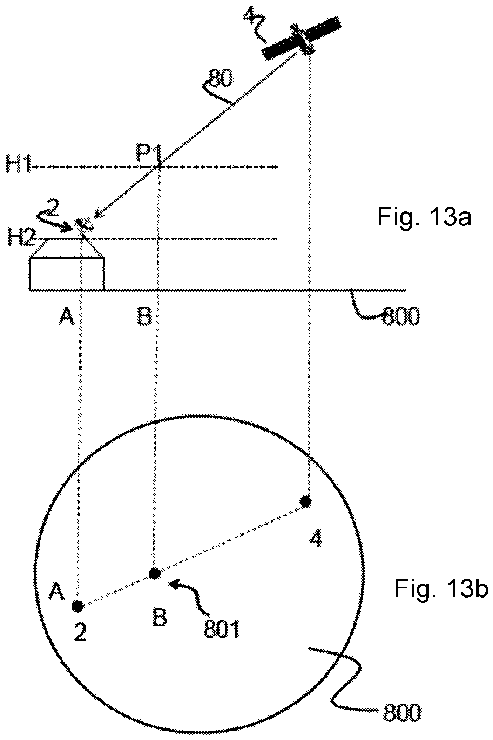

The estimation of the precipitation positions is explained below with reference to figures 13a and 13b, which show a front view and a top view, respectively, of a measuring unit 2 which receives a radio signal 80 from the satellite 4. Once the position (longitude, latitude and height above the sea level) of the measuring unit 2 and the satellite 4 is known, the point P1 is calculated wherein the isotherm H1 at 0° C is intercepted by the radio signal and therefore begins to be subjected to precipitations.

Thus it is possible to calculate the length of the satellite radio signal path P1-2 subjected to precipitations.

By projecting on the ground the radio signal path P1-2 subjected to precipitations, 5 a segment AB of the territory subjected to rainfall is determined with an intensity given by formula (1).

Obviously other methods, also known per se if any, can be used for calculating the position of the precipitations on the territory, for example methods based on the "mixing ratio" or "condensation 10 mixing ratio" can be used.

The possibility of having on the ground a plurality of antennas receiving several satellites, allows therefore a so-called tomography of the atmospheric layers to be carried out by discretizing them at heights based on the discretization at the ground. The latter is imposed by the distribution of the measuring units arranged on the territory. The greater such distribution the finer the discretization, both planimetric and altimetric, of the troposphere. Such discretization provides a sort of three-dimensional numerical model, where in each cell the content of water in the liquid state has been evaluated.

Once the paths of the radio signals subjected to atmospheric precipitations (and consequently the precipitation positions) as well as the intensity of such precipitations have been calculated, the processor unit 3020 generates, step 405, a map of the precipitations, preferably by interpolating the intensity and position data calculated at the previous steps.

The monitoring of space-time trends of the phenomena, integrated with the information from other systems (such as for example GNSS) may contribute in better estimating short term forecasts.

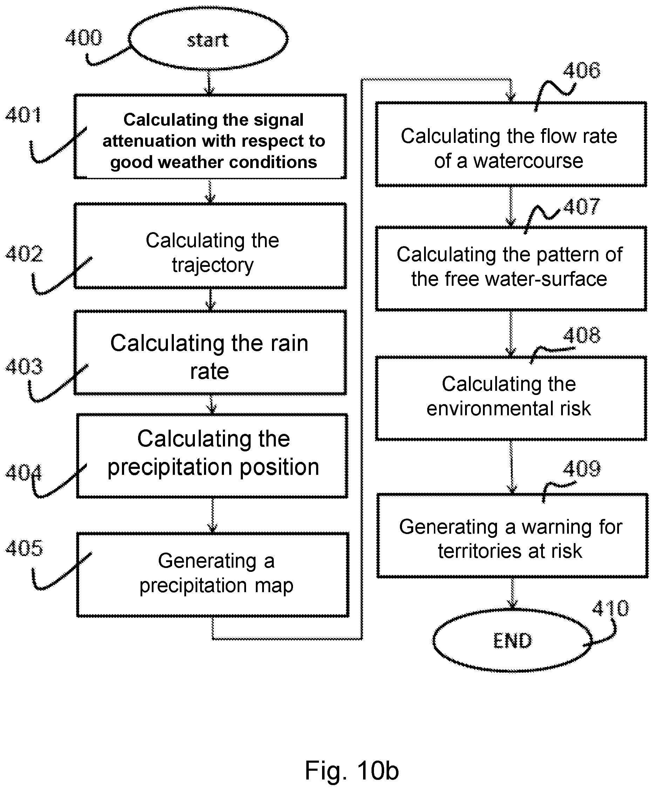

In the embodiment of figure 10b, the steps of a method alternative to that of figure 10a are shown. In this embodiment, the memory unit 3021 comprises a hydrogeological model of the territory to be monitored, the model therefore comprises data about the orography of the territory, the bed and the path of watercourses on the territory.

In addition to the generation of the precipitation map, by using the model of the territory to be monitored, the processor 3020 calculates (step 406) the expected flow rate of a watercourse starting from the measurement of the intensity of the precipitations dropping away over the several measuring units 2 and the hydrological analyses (integrated in the model) of the watercourse.

Once the flow rate of the watercourse is calculated, at step 407 the method provides the calculation of the pattern of the water free-surface of the watercourse starting from the calculated flow rate and the orography of the bed of the watercourse, since the latter is available in the model of the territory mentioned above.

Finally, step 408, areas of the territory potentially floodable by the watercourse are defined on the basis of the pattern of the water free-surface and orography of the territory, since this is a datum of the model too.

If a territory is under flooding risk, the processor 3020 generates an alarm signal (step 409) that, in the preferred embodiment, is transmitted to remote alarm units by means of a transmitter 303.

The transmission of alarm signals preferably occurs by employing cryptography in order to prevent data from being tampered.

As an alternative or in addition to the transmission of the alarm signal, the latter can be displayed on a monitor of the central system where an operator is working.

In case of transmission to the remote alarm units, the type of transmitted alarm signal depends on the type of alarm unit. For example, the alarm signal may be a text message (e.g. SMS or MMS) sent to a remote terminal, particularly a mobile telephone.

With reference to the territory model and the calculation of the environmental risk, the profile of the free surface of the flow will be calculated per assigned liquid flow rate, through the use of one-dimensional hydraulic models, such as for example HEC-RAS® software; therefore hazard maps will be created through an innovative automatic procedure built in GIS environment that models the overflow process, so as to achieve the definition of perimeters of the territories potentially under flooding risk, by integrating these maps with information related to the vulnerability of the analyzed territory and the risk elements therein that are therefore potentially affected by the phenomenon.

In fact, the "risk", defined for the first time in an UNESCO statement edited by Varnes and IAEG (International Association for Engineering Geology and the Environment), is the "expected extent of damage within a given area and within a specified period of time due to a particular calamitous phenomenon". From the mathematical point of view, the risk R is calculated as the product the following three factors:

1) H (hazard), probability that a damaging event of a given magnitude affects a given spatial region within a specified time slot;
2) E (elements at risk), a suitable magnitude indicating the elements at risk, all the elements (e.g. population, properties, economic activities) being in a given area and therefore potentially affected by the phenomenon;
3) V (vulnerability), expected degree of loss of the elements exposed at risk, resulting from the occurrence of a damaging phenomenon of given magnitude.

Analyses of vulnerability (V) and locating of elements at risk (E) can be carried out, for example in GIS environment, if the territory and the elements thereon are deeply known. The hazard map (H) will be calculated by the procedure described above with reference to figures 10a and 10b, still implementable in GIS environment, once known and made the altimetric model of the territory and the profile of the free surface at the axis of the bed of a watercourse. The product of such factors will lead to the creation of maps of potential risk.

An innovative feature of the procedure for modeling the overflow phenomenon is that, while maintaining substantially one-dimensional characteristics, it considers the two-dimensionality both of the territory and the overflow phenomenon, thanks to the recursive nature of the procedure itself.

In comparison with a really two-dimensional model, i.e. a model simulating the water propagation in all the directions of the plane, this procedure has the advantage of requiring a smaller computational burden, so that it can be applied even to very long watercourse portions with an extent exceeding 100 km; it can be also applied to the propagation of a flood wave, once the stationary profiles of the free surface are known at different moments, for obtaining the trend over time of the flooding process. Moreover, the two-dimensional models need a calibration that often is not easy especially on a large scale, which is not required by the present procedure.

Considering the above, it is clear how the monitoring system and method described above achieve the predetermined purposes.

Moreover it is clear that many variations can be made to the system and method described above without for this reason departing from the protection scope defined by the accompanying claims.

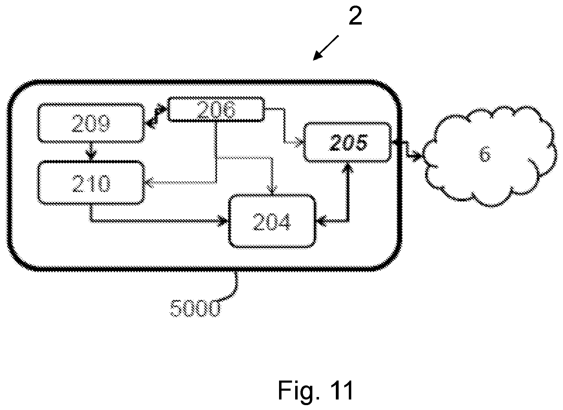

For example, figure 11 shows an alternative measuring unit 2 with respect to the one described above with reference to figure 2.

In the embodiment of figure 11, the measuring unit 2 comprises a measuring device 5000 comprising a GNSS receiver 209 that receives signals of the GNSS type and measures the power and/or delay thereof so that to be able to calculate (at the central system or processor 204) the position and/or intensity of atmospheric events (e.g. rainfall or water vapor).

A module 210, connected to the receiver 209, is provided for measuring the power and/or delay of the signal and it gives the measured datum to the processor 204 that forwards it to the central system in a way similar to what described with reference to figure 2. As known, GNSS signals are typically transmitted at a frequency lower than those used for television transmissions. In particular, GNSS signals are usually transmitted in the L band, for example about 1.2 GHz and 1.5 GHz for the GPS system. At such frequencies, the attenuation of radio signals are deeply influenced by the water vapor rather than droplets falling down; the measuring unit of figure 11, therefore allows hydrometeors to be detected and water vapor thereof to be measured. This information can be used by the monitoring system 1 for integrating information about the precipitations measured by other measuring units, for example the units provided with a measuring device 2000, that receive signals at frequencies sensitive to atmospheric precipitations, for example commercial television signals.

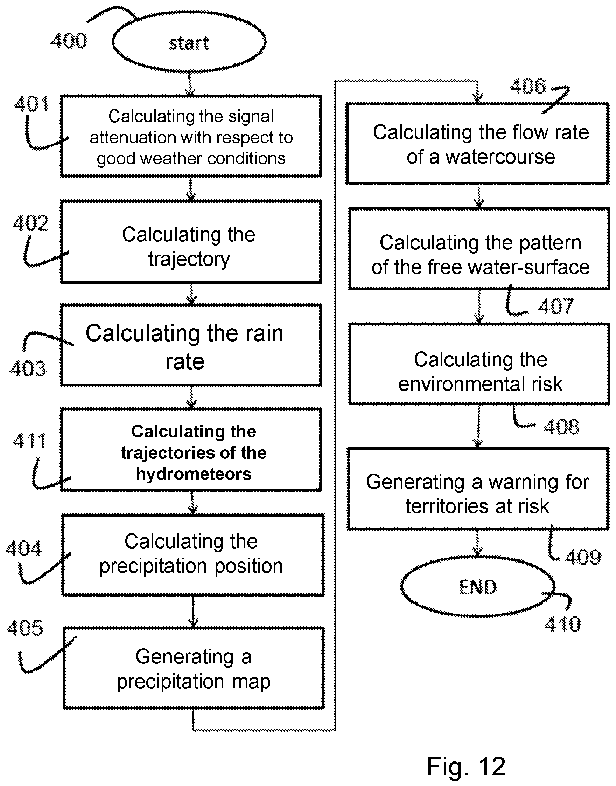

In the example of figure 12, in addition to steps 400-410 described above with reference 25 to figure 10b, the monitoring system provides a further step (411) of calculating the trajectories of the hydrometeors.

Such calculation is made by interpolating the data received from the several measuring units 2 arranged on the territory. Each measuring unit receives satellite signals from one or more satellites and therefore provides information on precipitations along one or more trajectories. Therefore, by interpolating the data received from the several measuring units, the central system is able to understand the hydrometeor trajectories and take them into account in order to forecast the pattern of the water free-surface of the watercourses on a given territory, so as to more accurately calculate the environmental risk and generate alarm signals within a time useful for taking protection measures for the population.

Even if the invention has been described above with reference to specific block diagrams, it is clear that such blocks are merely by way of illustration of the functions of the system and therefore the latter can be implemented by unifying, integrating or separating the blocks mentioned above.

Likewise, different devices can be unified and integrated in different manners, for example the central system 3 may be a system of the cloud type, wherein different computers execute different portions of the process calculating the environmental risk.

In an embodiment, the measuring device (2000, 5000 or 6000 depending on the selected embodiment) is made as an electronic board intended to be integrated inside satellite television decoders. As an alternative, the functions measuring the power and possibly calculating the rain rate according to formula (1), can be software-implemented by adding to the software of a receiver/ decoder of television signals code portions designed for this purpose.

It is therefore object of the present description also a satellite television receiver comprising an antenna input for the connection to an antenna adapted to receive satellite television signals, means operatively connected to the antenna input for decoding the electrical signals at said antenna input, the receiver being characterized in that it further comprises means for measuring the power of an electrical signal at said antenna input and means for transmitting to a remote device 3 a datum associated with said measurement.

**Claims**

1. System for the environmental monitoring of precipitation events (1), comprising a central unit (3) and one or more remote measuring units (2) operatively connected to the central unit (3), in which the measuring unit or units (2) comprise:

   - at least one receiver (200, 203) adapted to receive a radio signal transmitted by one or more microwave transmitters (4) and to measure the power of the electrical signal generated by the reception of the radio signal

   $(p_{m,v}^{dB})$ ;

   - a transmitting system (205) to transmit to the central unit (3) a datum associated with the measured power, a piece of information about the transmitter (v) from which the radio signal was received and a piece of information about the measuring unit (m),
   and wherein the central unit (3) comprises:
   a receiver (301) for receiving data transmitted by the remote measuring unit or units (2);
   - a processor unit (3020) operatively connected to the receiver (301) and configured for calculating, on the basis of the data transmitted by the remote measuring unit or units (2), the attenuation of the radio signal

   $(p_{m,v}^{0,dB} - p_{m,v}^{dB})$ that crosses an observation zone from a plurality of different directions (m-v, m'-v'),
   said directions (m-v, m'-v') being defined each by a different pair of measuring unit (m) and microwave transmitter (v), in which pair the measuring unit (m) and the microwave transmitter (v) have a different position relative to the other measuring units (m) and the other transmitters; (v) the spatial distribution of precipitation events in said zone being reconstructed, based on the radio attenuations of the radio signals transmitted and received along said directions (m-v) between the different pairs of measuring units (m) and microwave transmitters (v).

2. System according to claim 1, in which the central unit (3) is adapted to discretize the observation zone in N sub-zones $X_i$, also called rainxels, to which a $Y_i$ value associated with the precipitation intensity $R_i$ in that particular sub-zone $X_i$ is assigned based on the attenuation information of the radio signal transmitted and received between measuring uni t/transmitter pairs (m, v) which define the transmitted-signal propagation directions (m-v) passing through each sub-zone $X_i$.

3. System according to claim 2, wherein the parameter $Y_i$ associated with the precipitation intensity $R_i$ in the rainxel $X_i$ included in the path in the m-v direction defined by the propagation direction of the signal between a measuring unit m and a transmitter v of a measuring unit/transmitter pair, is given by the following relation:

$$Y_i = k_{m,v} \cdot R_i^{\alpha_{m,v}} \cdot \delta_i$$

where $k_{m,v}$ and $\alpha_{m,v}$ are coefficients depending on the frequency and polarization of the received electromagnetic signal, $\delta_i$ is the distance traveled by the signal within the rainxel Xi.

4. System according to claim 2 or 3 wherein, named M the number of measuring units m and V the number of transmitters v from which at least part of the measuring units receive a radio signal in a direction crossing the observation zone, the parameters $Y_i$ are determined by the central unit by solving a system of M·V equations having as constant term the attenuation which the radio signal is subjected to along the path in the coming m-v direction defined by each pair of measuring unit m and transmitter v, and by correlating the attenuation piece-of-information of each rainxel belonging to said path with the attenuation piece-of-information of rainxels belonging to different paths in m'-v' direction defined by different pairs of measuring units m' and transmitters v'.

5. System according to one or more of the preceding claims, wherein the central unit is configured to determine the N values of the parameter $Y_i$ by solving the following system of equations:

$$\begin{bmatrix} p_{1,1}^{0,dB} - p_{1,1}^{dB} \\ p_{1,2}^{0,dB} - p_{1,2}^{dB} \\ ... \\ p_{M,V}^{0,dB} - p_{M,V}^{dB} \end{bmatrix} = \begin{bmatrix} w_{1,1}^{t} \\ w_{1,2}^{t} \\ ... \\ w_{M,V}^{t} \end{bmatrix} \cdot \begin{bmatrix} Y_1 \\ Y_2 \\ ... \\ Y_N \end{bmatrix}$$

where $p_{m,v}^{0,dB} - p_{m,v}^{dB}$ is the attenuation, expressed in dB, the signal has been subjected to with respect to a reference condition, such as absence of precipitations, in the path in m-v direction defined by the pair of measuring unit m and transmitter v, $w_{m,v}^{t}$ is the row vector of N elements whose i-th element value is either "1", if the i-th rainxel is in the path in m-v direction between measuring unit m and transmitter v, or else "0".

6. System according to one or more of the preceding claims, wherein the central unit is configured to determine the N values of the precipitation intensity $R_i$ in the rainxel $X_i$ by solving the following system of equations:

$$\begin{bmatrix} p_{1,1}^{0,dB} - p_{1,1}^{dB} \\ p_{1,2}^{0,dB} - p_{1,2}^{dB} \\ ... \\ p_{M,V}^{0,dB} - p_{M,V}^{dB} \end{bmatrix} = \begin{bmatrix} k_{1,1} \sum_{n=1}^{N} w_{1,1,n} R_n^{\alpha_{1.1}} \delta_n \\ k_{1,2} \sum_{n=1}^{N} w_{1,2,n} R_n^{\alpha_{1.2}} \delta_n \\ ... \\ k_{M,V} \sum_{n=1}^{N} w_{M,V,n} R_n^{\alpha_{M.V}} \delta_n \end{bmatrix}$$

where $p_{m,v}^{0,dB} - p_{m,v}^{dB}$ is the attenuation, expressed in dB, the signal has been subjected to with respect to a reference condition, such as absence of precipitations, in the path in m-v direction defined by the pair of measuring unit m and transmitter v, $w_{m,v,n}$ is a vector whose value is either "1", if the n-th rainxel is in said path in m-v direction, or else "0", $\delta_n$ is the distance traveled by the signal in the rainxel $X_n$ belonging to said path in m-v direction.

7.  System according to one or more of the preceding claims, wherein the information coming from the remote measuring units can be processed in real time thereby allowing the central unit to define the space-time location of the precipitation event within the observation zone.

8.  System according to claim 7, wherein the central unit is configured to calculate the gradient of the spatial movement of the precipitation event as a function of time and estimate future time-trends of the event by using a database containing historical information about the trend of precipitation events in the observation zone as a function of said gradient.

9.  System according to one or more of the preceding claims, wherein the central unit further includes a program memory containing code lines of an electronic model of a territory to be monitored, the model including data relating the extent of the precipitation phenomenon and the environmental and/or hydrogeological risk with respect to the site where the phenomenon is located, the processor unit being adapted to calculate an environmental and/or hydrogeological risk for the observation zone, on the basis of both the information contained in the electronic model of the territory and the data transmitted by the remote measuring units or units.

10. System according to one or more of the preceding claims, wherein the central unit has one or more inputs for receiving further meteorological data about the observation zone such as, for example, wind, humidity, temperature, pressure, rainfall fields extracted from other systems, the processor unit processing said further data in order to increase the ability to identify weather conditions in the observation zone and to forecast the trend of the weather conditions in the same zone and/or in a zone having extent greater than the observation one.

11. System according to one or more of the preceding claims, wherein the receiving units are distributed along a main direction and sequentially activated so as to simulate the scanning of a weather radar.

12. Method for the environmental monitoring of precipitation events using the system according to one or more of the claims 1 to 11, in which:

    - a plurality of radio signals transmitted by one or more microwave transmitters are received by one or more receivers,
    - per each received signal, the coming m-v direction of said signal defined by the propagation direction of the signal between the transmitter v and the measuring unit m, the length of the path traveled by the signal from the transmitter, or a reference height, up to the receiver, and the attenuation the signal that crosses an observation zone from a plurality of different directions (m-v, m'-v') has been subjected to with respect to a reference condition, such as absence of precipitation, are determined,
    said directions (m-v, m'-v') being defined each by a different pair of measuring unit (m) and microwave transmitter (v), in which pair at least one of the measuring unit (m) and the microwave transmitter (v) has a different position relative to either the other measuring units (m) and/or the other transmitters; (v) the spatial distribution of precipitation events in said zone being reconstructed, based on the radio attenuations of the radio signals transmitted and received along said directions (m-v) between the different pairs of measuring units (m) and microwave transmitters (v),
- an observation zone is defined,
- said observation zone is discretized in N sub-zones $X_i$, called rainxels,
- the sub-zones crossed by the same signal are identified,
- the rain rate $R_i$, or a parameter $Y_i$ associated with the rain rate in each sub-zone $X_i$, is calculated starting from the total attenuations each signal has been subjected to in the various receiving directions subtended by rainxel groups.

13. Method according to claim 12, wherein the rain rate $R_i$ or a parameter $Y_i$ associated with the rain rate in each sub-zone $X_i$ is calculated by solving the following system of equations

$$\begin{bmatrix} p_{1,1}^{0,dB} - p_{1,1}^{dB} \\ p_{1,2}^{0,dB} - p_{1,2}^{dB} \\ ... \\ p_{M,V}^{0,dB} - p_{M,V}^{dB} \end{bmatrix} = \begin{bmatrix} k_{1,1} \sum_{n=1}^{N} w_{1,1,n} R_n^{\alpha_{1.1}} \delta_n \\ k_{1,2} \sum_{n=1}^{N} w_{1,2,n} R_n^{\alpha_{1.2}} \delta_n \\ ... \\ k_{M,V} \sum_{n=1}^{N} w_{M,V,n} R_n^{\alpha_{M.V}} \delta_n \end{bmatrix}$$

or the following system of equations

$$\begin{bmatrix} p_{1,1}^{0,dB} - p_{1,1}^{dB} \\ p_{1,2}^{0,dB} - p_{1,2}^{dB} \\ ... \\ p_{M,V}^{0,dB} - p_{M,V}^{dB} \end{bmatrix} = \begin{bmatrix} w_{1,1}^{t} \\ w_{1,2}^{t} \\ ... \\ w_{M,V}^{t} \end{bmatrix} \cdot \begin{bmatrix} Y_1 \\ Y_2 \\ ... \\ Y_N \end{bmatrix}$$

where $p_{m,v}^{0,dB} - p_{m,v}^{dB}$ is the attenuation, expressed in dB, the signal has been subjected to with respect to a reference condition, such as absence of precipitations, in the m-v path, $w_{m,v,n}$ is a vector whose value is either "1", if the n-th rainxel is in the path in m-v direction between measuring unit m and transmitter v, or else "0", $\delta_n$ is the distance traveled by the signal within the rainxel Xn belonging to the path in m-v direction between the measuring unit m and the transmitter v, $w_{m,v}^{t}$, is the row vector of N elements whose i-th element value is either "1", if the i-th rainxel is in the path in m-v direction between the measuring unit m and the transmitter v, or else "0".

14. Method according to claim 12 or 13, wherein the number of discretizations and/or the size of the observation zone are adaptively varied based on the number and directions determined by the measuring unit/transmitter pairs (m, v) so as to allow the precipitation amount to be estimated for at least part of the rainxels.

**Patentansprüche**

1. System für die Umweltüberwachung von Niederschlagsereignissen (1), das eine Zentraleinheit (3) und eine oder mehrere Fernmesseinheiten (2), die mit der Zentraleinheit (3) wirkverbunden sind, umfasst, bei dem die Messeinheit oder -einheiten (2) Folgendes umfassen:

- mindestens einen Empfänger (200, 203), der angepasst ist, ein Funksignal, das von einem oder mehreren Mikrowellensendern (4) übertragen wird, zu empfangen und die Leistung des elektrischen Signals, das durch den Empfang des Funksignals $\left(p_{m,v}^{dB}\right)$ erzeugt wird, zu messen;

- ein Übertragungssystem (205) zum Übertragen eines Messwerts, der mit der gemessenen Leistung verknüpft ist, eines Informationselements über den Sender (v), von dem das Funksignal empfangen wurde, und eines Informationselements über die Messeinheit (m) zur Zentraleinheit (3),

und wobei die Zentraleinheit (3) Folgendes umfasst:

einen Empfänger (301) zum Empfangen von Daten, die von der Fernmesseinheit bzw. den Fernmesseinheiten (2) übertragen werden;

- eine Prozessoreinheit (3020), die mit dem Empfänger (301) wirkverbunden und zum Berechnen der Dämpfung des Funksignals $\left(p_{m,v}^{0,dB} - p_{m,v}^{dB}\right)$, das eine Beobachtungszone aus einer Vielzahl von verschiedenen Richtungen (m-v, m'-v') durchquert, auf Basis der von der Fernmesseinheit bzw. den Fernmesseinheiten (2) gemessenen Daten ausgelegt ist,

wobei die Richtungen (m-v, m'-v') jeweils durch ein anderes Paar aus Fernmesseinheit (m) und Mikrowellensender (v) definiert sind, wobei bei dem Paar die Messeinheit (m) und der Mikrowellensender (v) mit Bezug auf die anderen Messeinheiten (m) und die anderen Sender (v) eine andere Position aufweisen; wobei die räumliche Verteilung von Niederschlagsereignissen in der Zone auf Basis der Funkdämpfung der Funksignale, die entlang den Richtungen (m-v) zwischen den verschiedenen Paaren von Messeinheiten (m) und Mikrowellensendern (v) übertragen und empfangen werden, rekonstruiert wird.

2. System nach Anspruch 1, bei dem die Zentraleinheit (3) angepasst ist, die Beobachtungszone in N Unterzonen $X_i$, die auch als Rainxel bezeichnet werden, zu diskretisieren, denen auf Basis der Dämpfungsinformationen des Funksignals, das zwischen Messeinheit-Sender-Paaren (m, v), die die Sendesignalausbreitungsrichtungen (m-v) definieren, die durch jede Unterzone $X_i$ verlaufen, übertragen und empfangen wird, ein Wert Yi zugewiesen wird, der mit der Niederschlagsintensität $R_i$ in dieser speziellen Unterzone $X_i$ verknüpft ist.

3. System nach Anspruch 2, wobei der Parameter $Y_i$, der mit der Niederschlagsintensität $R_i$ im Rainxel Xi verknüpft ist, das im Pfad in der m-v-Richtung beinhaltet ist, die durch die Ausbreitungsrichtung des Signals zwischen einer Messeinheit m und einem Sender v eines Messeinheit-Sender-Paares definiert wird, durch die folgende Beziehung gegeben ist:

$$Y_i = K_{m,v} \cdot R_i^{\propto_{m,v}} \cdot \delta_i$$

wo $K_{m,v}$ und $\alpha_{m,v}$ Koeffizienten sind, die von der Frequenz und der Polarisierung des empfangenen elektromagnetischen Signals abhängig sind, $\delta_i$ die Distanz ist, die vom Signal im Rainxel $X_i$ zurückgelegt wurde.

4. System nach Anspruch 2 oder 3, wobei M die Anzahl von Messeinheiten m und V die Anzahl von Sendern v, von denen mindestens ein Teil der Messeinheiten ein Funksignal in einer Richtung empfangen, die die Beobachtungszone durchquert, bezeichnet, die Parameter $Y_i$ durch Lösen eines Systems von M·V-Gleichungen, die als konstanten Term die Dämpfung aufweisen, der das Funksignal entlang des Pfades in der m-v-Ankunftsrichtung, die durch jedes Paar aus Messeinheit m und Sender v definiert wird, unterliegt, und durch Korrelieren des Dämpfungsinformationselements jedes Rainxels, das zu dem Pfad gehört, mit dem Dämpfungsinformationselement von Rainxeln, die zu anderen Pfaden in m'-v'-Richtung, die von anderen Paaren von Messeinheiten m' und Sendern v' definiert wird, gehören, durch die Zentraleinheit bestimmt werden.

5. System nach einem oder mehreren der vorhergehenden Ansprüche, wobei die Zentraleinheit dazu ausgelegt ist, die N Werte des Parameters $Y_i$ durch Lösen des folgenden Systems von Gleichungen zu bestimmen:

$$\begin{bmatrix} p_{1,1}^{0,dB} & - & p_{1,1}^{dB} \\ p_{1,2}^{0,dB} & - & p_{1,2}^{dB} \\ & \dots & \\ p_{M,V}^{0,dB} & - & p_{M,V}^{dB} \end{bmatrix} = \begin{bmatrix} w_{1,1}^{t} \\ w_{1,2}^{t} \\ \dots \\ w_{M,V}^{t} \end{bmatrix} \cdot \begin{bmatrix} Y_1 \\ Y_2 \\ \dots \\ Y_N \end{bmatrix}$$

wo $p_{m,v}^{0,dB} - p_{m,v}^{dB}$ die Dämpfung ist, die in dB ausgedrückt wird und der das Signal mit Bezug auf eine Referenzbedingung, wie etwa das Fehlen von Niederschlägen, im Pfad in m-v-Richtung, die durch das Paar aus Messeinheit m und Sender v definiert wird, unterlag, $p_{m,v}^{0,dB} - p_{m,v}^{dB}$ der Zeilenvektor von N Elementen ist, deren i-ter Elementwert entweder "1", wenn das i-te Rainxel im Pfad in m-v-Richtung zwischen Messeinheit m und Sender v liegt, andernfalls "0" ist.

6. System nach einem oder mehreren der vorhergehenden Ansprüche, wobei die Zentraleinheit dazu ausgelegt ist, die N Werte der Niederschlagsintensität $R_i$ im Rainxel $X_i$ durch Lösen des folgenden Systems von Gleichungen zu bestimmen:

$$\begin{bmatrix} p_{1,1}^{0,dB} - p_{1,1}^{dB} \\ p_{1,2}^{0,dB} - p_{1,2}^{dB} \\ ... \\ p_{M,V}^{0,dB} - p_{M,V}^{dB} \end{bmatrix} = \begin{bmatrix} k_{1,1} \sum_{n=1}^{N} w_{1,1,n} R_n^{\alpha_{1.1}} \delta_n \\ k_{1,2} \sum_{n=1}^{N} w_{1,2,n} R_n^{\alpha_{1.2}} \delta_n \\ ... \\ k_{M,V} \sum_{n=1}^{N} w_{M,V,n} R_n^{\alpha_{M.V}} \delta_n \end{bmatrix}$$

wo $p_{m,v}^{0,dB} - p_{m,v}^{dB}$ die Dämpfung ist, die in dB ausgedrückt wird und der das Signal mit Bezug auf eine Referenzbedingung, wie etwa das Fehlen von Niederschlägen, im Pfad in m-v-Richtung, die durch das Paar aus Messeinheit m und Sender v definiert wird, unterlag, $W_{m,v,n}$ ein Vektor ist, dessen Wert entweder "1", wenn das n-te Rainxel im Pfad in m-v-Richtung liegt, oder andernfalls "0" ist, $\delta_n$ die Distanz ist, die vom Signal im Rainxel Xn, das zu dem Pfad in m-v-Richtung gehört, zurückgelegt hat.

7. System nach einem oder mehreren der vorhergehenden Ansprüche, wobei die Informationen, die von den Fernmesseinheiten kommen, in Echtzeit verarbeitet werden können, wodurch es der Zentraleinheit möglich ist, die räumliche und zeitliche Lage des Niederschlagsereignisses innerhalb der Beobachtungszone zu definieren.

8. System nach Anspruch 7, wobei die Zentraleinheit dazu ausgelegt ist, den Gradienten der räumlichen Bewegung des Niederschlagsereignisses als eine Funktion von Zeit zu berechnen und künftige Zeittrends des Ereignisses unter Verwendung einer Datenbank, die historische Informationen über den Trend von Niederschlagsereignissen in der Beobachtungszone enthält, als eine Funktion des Gradienten zu schätzen.

9. System nach einem oder mehreren der vorhergehenden Ansprüche, wobei die Zentraleinheit ferner einen Programmspeicher beinhaltet, der Codezeilen eines elektronischen Modells eines zu überwachenden Gebiets enthält, wobei das Modell Daten beinhaltet, die das Ausmaß des Niederschlagsphänomens und das Umwelt- und/oder das hydrogeologische Risiko mit Bezug auf den Ort, an dem das Phänomen auftritt, betreffen, wobei die Prozessoreinheit angepasst ist, das Umwelt- und/oder das hydrogeologische Risiko für die Beobachtungszone auf Basis sowohl der Informationen, die im elektronischen Modell des Gebiets enthalten sind, als auch der Daten, die von der Fernmesseinheit bzw. den Fernmesseinheiten übertragen werden, zu berechnen.

10. System nach einem oder mehreren der vorhergehenden Ansprüche, wobei die Zentraleinheit einen oder mehrere Eingänge zum Empfangen von weiteren meteorologischen Daten über die Beobachtungszone aufweist, wie beispielsweise Wind, Feuchtigkeit, Temperatur, Druck, Regenfelder, die aus anderen Systemen extrahiert werden, wobei die Prozessoreinheit die weiteren Daten verarbeitet, um die Möglichkeit, Wetterbedingungen in der Beobachtungszone zu identifizieren, zu vergrößern und den Trend der Wetterbedingungen in derselben Zone und/oder in einer Zone mit einem größeren Ausmaß als die Beobachtungszone vorherzusagen.

**11.** System nach einem oder mehreren der vorhergehenden Ansprüche, wobei die Empfangseinheiten entlang einer Hauptrichtung verteilt sind und sequenziell aktiviert werden, um das Scannen eines Wetterradars zu simulieren.

**12.** Verfahren zur Umweltüberwachung von Niederschlagsereignissen unter Verwendung des Systems nach einem oder mehreren der Ansprüche 1 bis 11, bei dem:

- eine Vielzahl von Funksignalen, die von einem oder mehreren Mikrowellensendern übertragen werden, von einem oder mehreren Empfängern empfangen werden,
- pro empfangenem Signal die m-v-Ankunftsrichtung des Signals, die durch die Ausbreitungsrichtung des Signals zwischen dem Sender v und der Messeinheit m definiert wird, die Länge des Pfades, der vom Signal vom Sender zurückgelegt wird, oder eine Referenzhöhe, bis zum Empfänger, und die Dämpfung, dem das Signal, das die Beobachtungszone aus einer Vielzahl von verschiedenen Richtungen (m-v, m'-v') durchquert, mit Bezug auf eine Referenzbedingung unterlag, wie etwa das Fehlen von Niederschlag, bestimmt werden, wobei die Richtungen (m-v, m'-v') jeweils durch ein anderes Paar aus Fernmesseinheit (m) und Mikrowellensender (v) definiert sind, wobei bei dem Paar mindestens eines der Messeinheit (m) und des Mikrowellensenders (v) mit Bezug entweder auf die anderen Messeinheiten (m) und/oder die anderen Sender (v) eine andere Position aufweist; wobei die räumliche Verteilung von Niederschlagsereignissen in der Zone auf Basis der Funkdämpfung der Funksignale, die entlang den Richtungen (m-v) zwischen den verschiedenen Paaren von Messeinheiten (m) und Mikrowellensendern (v) übertragen und empfangen werden, rekonstruiert wird,
- eine Beobachtungszone definiert wird,
- die Beobachtungszone in N Unterzonen Xi, die als Rainxel bezeichnet werden, diskretisiert wird,
- die Unterzonen, die vom selben Signal durchquert werden, identifiziert werden,
- die Regenrate $R_i$ bzw. ein Parameter $Y_i$, der mit der Regenrate in jeder Unterzone $X_i$ verknüpft ist, berechnet wird, beginnend bei der Gesamtdämpfung, der jedes Signal in den verschiedenen Empfangsrichtungen, die von Rainxelgruppen geschnitten werden, unterlag.

**13.** Verfahren nach Anspruch 12, wobei die Regenrate $R_i$ bzw. ein Parameter $Y_i$, der mit der Regenrate in jeder Unterzone $X_i$ verknüpft ist, durch Lösen des folgenden Systems von Gleichungen berechnet wird

$$
\begin{bmatrix}
p_{1,1}^{0,dB} - p_{1,1}^{dB} \\
p_{1,2}^{0,dB} - p_{1,2}^{dB} \\
... \\
p_{M,V}^{0,dB} - p_{M,V}^{dB}
\end{bmatrix}
=
\begin{bmatrix}
k_{1,1} \sum_{n=1}^{N} w_{1,1,n} R_n^{\alpha 1.1} \delta_n \\
k_{1,2} \sum_{n=1}^{N} w_{1,2,n} R_n^{\alpha 1.2} \delta_n \\
... \\
k_{M,V} \sum_{n=1}^{N} w_{M,V,n} R_n^{\alpha M.V} \delta_n
\end{bmatrix}
$$

oder des folgenden Systems von Gleichungen

$$
\begin{bmatrix}
p_{1,1}^{0,dB} - p_{1,1}^{dB} \\
p_{1,2}^{0,dB} - p_{1,2}^{dB} \\
... \\
p_{M,V}^{0,dB} - p_{M,V}^{dB}
\end{bmatrix}
=
\begin{bmatrix}
w_{1,1}^{t} \\
w_{1,2}^{t} \\
... \\
w_{M,V}^{t}
\end{bmatrix}
\cdot
\begin{bmatrix}
Y_1 \\
Y_2 \\
... \\
Y_N
\end{bmatrix}
$$

wo $p_{m,v}^{0,dB} - p_{m,v}^{dB}$ die Dämpfung ist, die in dB ausgedrückt wird und der das Signal mit Bezug auf eine Referenzbedingung, wie etwa das Fehlen von Niederschlägen, im Pfad in m-v-Richtung, unterlag, $W_{m,v,n}$ ein Vektor ist, dessen Wert entweder "1", wenn das n-te Rainxel im Pfad in m-v-Richtung zwischen Messeinheit m und Sender v liegt, oder andernfalls "0" ist, $\delta_n$ die Distanz ist, die vom Signal im Rainxel $X_n$, das zu dem Pfad in m-v-Richtung gehört, zwischen der Messeinheit m und dem Sender v zurückgelegt hat, $p_{m,v}^{0,dB} - p_{m,v}^{dB}$ der Zeilenvektor von N Elementen ist, deren i-ter Elementwert entweder "1", wenn das i-te Rainxel im Pfad in m-v-Richtung zwischen der Messeinheit m und dem Sender v liegt, andernfalls "0" ist.

**14.** Verfahren nach Anspruch 12 oder 13, wobei die Anzahl von Diskretisierungen und/oder die Größe der Beobachtungszone auf Basis der Anzahl und Richtungen, die durch die Messeinheit-Sender-Paare (m, v) bestimmt werden, adaptiv variiert werden, um es zu erlauben, die Niederschlagsmenge für mindestens einen Teil der Rainxel zu schätzen.

## Revendications

**1.** Système pour la surveillance environnementale d'événements de précipitation (1), comprenant une unité centrale (3) et une ou plusieurs unités de mesure à distance (2) connectées de manière opérationnelle à l'unité centrale (3), où l'unité ou les unités de mesure (2) comprennent :

- au moins un récepteur (200, 203) adapté pour recevoir un signal radio émis par un ou plusieurs émetteurs micro-ondes (4) et pour mesurer la puissance du signal électrique généré par la réception du signal radio $\left(p_{m,v}^{dB}\right)$ ;

- un système d'émission (205) pour émettre à l'unité centrale (3) une donnée associée à la puissance mesurée, une information sur l'émetteur (v) à partir duquel le signal radio a été reçu et une information sur l'unité de mesure (m),
et où l'unité centrale (3) comprend :
un récepteur (301) pour recevoir des données émises par la ou les unités de mesure à distance (2) ;
- une unité de traitement (3020) connectée de manière opérationnelle au récepteur (301) et configurée pour calculer, sur la base des données émises par la ou les unités de mesure à distance (2), l'atténuation du signal radio $\left(p_{m,v}^{0,dB} - p_{m,v}^{dB}\right)$ qui traverse une zone d'observation à partir d'une pluralité de directions différentes (m-v, m'-v'),
lesdites directions (m-v, m'-v') étant définies chacune par une paire différente d'unité de mesure (m) et d'émetteur micro-ondes (v), paire dans laquelle l'unité de mesure (m) et l'émetteur micro-ondes (v) ont une position différente par rapport aux autres unités de mesure (m) et aux autres émetteurs ; (v) la distribution spatiale des événements de précipitation dans ladite zone étant reconstruite, sur la base des atténuations radio des signaux radio émis et reçus le long desdites directions (m-v) entre les différentes paires d'unités de mesure (m) et d'émetteurs micro-ondes (v).

**2.** Système selon la revendication 1, où l'unité centrale (3) est adaptée pour discrétiser la zone d'observation dans N sous-zones $X_i$, également appelées Rainxels, auxquelles une valeur $Y_i$ associée à l'intensité de précipitation $R_i$ dans cette sous-zone particulière $X_i$ est attribuée sur la base de l'information d'atténuation du signal radio émis et reçu entre des paires d'unité de mesure/émetteur (m, v) qui définissent les directions de propagation de signal émis (m-v) passant par chaque sous-zone $X_i$.

**3.** Système selon la revendication 2, où le paramètre $Y_i$ associé à l'intensité de précipitation $R_i$ dans le Rainxel $X_i$ inclus dans le trajet dans la direction m-v définie par la direction de propagation du signal entre une unité de mesure m et un émetteur v d'une paire d'unité de mesure/émetteur, est donné par la relation suivante :

$$Y_i = K_{m,v} \cdot R_i^{\alpha_{m,v}} \cdot \delta_i$$

où $K_{m,v}$ et $\alpha_{m,v}$ sont des coefficients dépendant de la fréquence et de la polarisation du signal électromagnétique reçu, $\delta_i$ est la distance parcourue par le signal dans le Rainxel Xi.

**4.** Système selon la revendication 2 ou 3, où, sont désignés M le nombre d'unités de mesure m et V le nombre d'émetteurs v à partir desquels au moins une partie des unités de mesure reçoivent un signal radio dans une direction traversant la zone d'observation, les paramètres $Y_i$ sont déterminés par l'unité centrale en résolvant un système d'équations M·V ayant comme terme constant l'atténuation à laquelle le signal radio est soumis le long du trajet dans la direction m-v à venir définie par chaque paire d'unité de mesure m et d'émetteur v, et en corrélant l'information d'atténuation de chaque Rainxel appartenant audit trajet avec l'information d'atténuation des Rainxels appartenant à des trajets différents dans la direction m'-v' définie par différentes paires d'unités de mesure m' et d'émetteurs v'.

5. Système selon une ou plusieurs des revendications précédentes, où l'unité centrale est configurée pour déterminer les N valeurs du paramètre $Y_i$ en résolvant le système d'équations suivant :

$$\begin{bmatrix} p_{1,1}^{0,dB} & - & p_{1,1}^{dB} \\ p_{1,2}^{0,dB} & - & p_{1,2}^{dB} \\ & \dots & \\ p_{M,V}^{0,dB} & - & p_{M,V}^{dB} \end{bmatrix} = \begin{bmatrix} w_{1,1}^{t} \\ w_{1,2}^{t} \\ \dots \\ w_{M,V}^{t} \end{bmatrix} \cdot \begin{bmatrix} Y_1 \\ Y_2 \\ \dots \\ Y_N \end{bmatrix}$$

où $p_{m,v}^{0,dB} - p_{m,v}^{dB}$ est l'atténuation, exprimée en dB, à laquelle le signal a été soumis par rapport à une condition de référence, telle que l'absence de précipitations, dans le trajet dans la direction m-v définie par la paire d'unité de mesure m et d'émetteur v, $w_{m,v}^{t}$ est le vecteur ligne de N éléments dont la i-ième valeur d'élément est soit "1", si le i-ième Rainxel est dans le trajet dans la direction m-v entre l'unité de mesure m et l'émetteur v, soit "0".

6. Système selon une ou plusieurs des revendications précédentes, où l'unité centrale est configurée pour déterminer les N valeurs de l'intensité de précipitation $R_i$ dans le Rainxel $X_i$ en résolvant le système d'équations suivant :

$$\begin{bmatrix} p_{1,1}^{0,dB} - p_{1,1}^{dB} \\ p_{1,2}^{0,dB} - p_{1,2}^{dB} \\ \dots \\ p_{M,V}^{0,dB} - p_{M,V}^{dB} \end{bmatrix} = \begin{bmatrix} k_{1,1} \sum_{n=1}^{N} w_{1,1,n} R_n^{\alpha_{1.1}} \delta_n \\ k_{1,2} \sum_{n=1}^{N} w_{1,2,n} R_n^{\alpha_{1.2}} \delta_n \\ \dots \\ k_{M,V} \sum_{n=1}^{N} w_{M,V,n} R_n^{\alpha_{M.V}} \delta_n \end{bmatrix}$$

où $p_{m,v}^{0,dB} - p_{m,v}^{dB}$ est l'atténuation, exprimée en dB, à laquelle le signal a été soumis par rapport à une condition de référence, telle que l'absence de précipitations, dans le trajet dans la direction m-v définie par la paire d'unité de mesure m et d'émetteur v, $W_{m,v,n}$ est un vecteur dont la valeur est soit "1", si le n-ième Rainxel est dans ledit trajet dans la direction m-v, soit "0", $\delta_n$ est la distance parcourue par le signal dans le Rainxel $X_n$ appartenant audit trajet dans la direction m-v.

7. Système selon une ou plusieurs des revendications précédentes, où les informations provenant des unités de mesure à distance peuvent être traitées en temps réel permettant ainsi à l'unité centrale de définir l'emplacement spatio-temporel de l'événement de précipitation à l'intérieur de la zone d'observation.

8. Système selon la revendication 7, où l'unité centrale est configurée pour calculer le gradient du mouvement spatial de l'événement de précipitation en fonction du temps et estimer les tendances temporelles futures de l'événement en utilisant une base de données contenant des informations historiques sur la tendance des événements de précipitation dans la zone d'observation en fonction dudit gradient.

9. Système selon une ou plusieurs des revendications précédentes, où l'unité centrale comprend en outre une mémoire de programme contenant des lignes de code d'un modèle électronique d'un territoire à surveiller, le modèle comprenant des données concernant l'étendue du phénomène de précipitation et le risque environnemental et/ou hydrogéologique par rapport au site où le phénomène est situé, l'unité de processeur étant adaptée pour calculer un risque environnemental et/ou hydrogéologique pour la zone d'observation, sur la base à la fois des informations contenues dans le modèle électronique du territoire et des données émises par les unités ou unités de mesure à distance.

10. Système selon une ou plusieurs des revendications précédentes, où l'unité centrale a une ou plusieurs entrées pour recevoir d'autres données météorologiques concernant la zone d'observation telles que, par exemple, le vent, l'humidité, la température, la pression, les champs de précipitation extraits d'autres systèmes, l'unité de processeur traitant lesdites autres données afin d'augmenter la capacité à identifier des conditions météorologiques dans la zone d'observation et à prévoir la tendance des conditions météorologiques dans la même zone et/ou dans une zone ayant une étendue supérieure à celle d'observation.

11. Système selon une ou plusieurs des revendications précédentes, où les unités de réception sont distribuées le long d'une direction principale et activées séquentiellement de manière à simuler le balayage d'un radar météorologique.

12. Procédé de surveillance environnementale d'événements de précipitation utilisant le système selon une ou plusieurs des revendications 1 à 11, où :

- une pluralité de signaux radio émis par un ou plusieurs émetteurs micro-ondes sont reçus par un ou plusieurs récepteurs,
- pour chaque signal reçu, la direction m-v à venir dudit signal définie par la direction de propagation du signal entre l'émetteur v et l'unité de mesure m, la longueur du trajet parcouru par le signal de l'émetteur, ou une hauteur de référence, jusqu'au récepteur, et l'atténuation à laquelle le signal qui traverse une zone d'observation à partir d'une pluralité de directions différentes (m-v, m'-v') a été soumis par rapport à une condition de référence, telle qu'une absence de précipitation, sont déterminées,
lesdites directions (m-v, m'-v') étant définies chacune par une paire différente d'unité de mesure (m) et d'émetteur micro-ondes (v), paire dans laquelle au moins une de l'unité de mesure (m) et de l'émetteur micro-ondes (v) a une position différente par rapport aux autres unités de mesure (m) et/ou aux autres émetteurs ; (v) la distribution spatiale des événements de précipitation dans ladite zone étant reconstruite, sur la base des atténuations radio des signaux radio émis et reçus le long desdites directions (m-v) entre les différentes paires d'unités de mesure (m) et d'émetteurs micro-ondes (v),
- une zone d'observation est définie,
- ladite zone d'observation est discrétisée en N sous-zones $X_i$, appelées Rainxels,
- les sous-zones traversées par le même signal sont identifiées,
- le taux de pluie $R_i$, ou un paramètre $Y_i$ associé au taux de pluie dans chaque sous-zone $X_i$, est calculé à partir des atténuations totales auxquelles chaque signal a été soumis dans les différentes directions de réception sous-tendues par des groupes de Rainxel.

13. Procédé selon la revendication 12, où le taux de pluie $R_i$ ou un paramètre $Y_i$ associé au taux de pluie dans chaque sous-zone $X_i$ est calculé en résolvant le système d'équations suivant

$$\begin{bmatrix} p_{1,1}^{0,dB} - p_{1,1}^{dB} \\ p_{1,2}^{0,dB} - p_{1,2}^{dB} \\ ... \\ p_{M,V}^{0,dB} - p_{M,V}^{dB} \end{bmatrix} = \begin{bmatrix} k_{1,1} \sum_{n=1}^{N} w_{1,1,n} R_n^{\alpha_{1.1}} \delta_n \\ k_{1,2} \sum_{n=1}^{N} w_{1,2,n} R_n^{\alpha_{1.2}} \delta_n \\ ... \\ k_{M,V} \sum_{n=1}^{N} w_{M,V,n} R_n^{\alpha_{M.V}} \delta_n \end{bmatrix}$$

ou le système d'équations suivant

$$\begin{bmatrix} p_{1,1}^{0,dB} - p_{1,1}^{dB} \\ p_{1,2}^{0,dB} - p_{1,2}^{dB} \\ \dots \\ p_{M,V}^{0,dB} - p_{M,V}^{dB} \end{bmatrix} = \begin{bmatrix} w_{1,1}^{t} \\ w_{1,2}^{t} \\ \dots \\ w_{M,V}^{t} \end{bmatrix} \cdot \begin{bmatrix} Y_1 \\ Y_2 \\ \dots \\ Y_N \end{bmatrix}$$

où $p_{m,v}^{0,dB} - p_{m,v}^{dB}$ est l'atténuation, exprimée en dB, à laquelle le signal a été soumis par rapport à une condition de référence, telle que l'absence de précipitations, dans le trajet m-v, $W_{m,v,n}$ est un vecteur dont la valeur est soit "1", si le n-ième Rainxel est dans le trajet dans la direction m-v entre l'unité de mesure m et l'émetteur v, soit "0", $\delta_n$ est la distance parcourue par le signal dans le Rainxel Xn appartenant au trajet dans la direction m-v entre l'unité de mesure m et l'émetteur v, $w_{m,v}^{t}$ ' est le vecteur ligne de N éléments dont la i-ième valeur d'élément est soit "1", si le i-ième Rainxel est dans le trajet dans la direction m-v entre l'unité de mesure m et l'émetteur v, soit "0".

14. Procédé selon la revendication 12 ou 13, où le nombre de discrétisations et/ou la taille de la zone d'observation sont modifiés de manière adaptative sur la base du nombre et des directions déterminés par les paires d'unité de mesure/émetteur (m, v) de manière à permettre l'estimation de la quantité de précipitation pour au moins une partie des Rainxels.

Fig. 1

Fig. 2

Fig. 3

Fig. 4

Fig. 5

Fig. 6

Fig. 7

Fig. 8

**900** — start

**902** — Calculating, per each signal received from a measuring unit, the coming direction, the path traveled by the signal from a reference height to the unit and the attenuation of the signal with respect to a reference condition

**904** — Defining an observation zone

**906** — Discretizing the observation zone in N subzones (rainxels) $X_i$

**908** — Identifying the subzones crossed by the same received signal

**910** — Calculating, in each subzone, the rain rate $R_i$ or a parameter $Y_i$ associated in each sub-zone $X_i$ with the rain rate, starting from the total attenuations each signal has been subjected to in the various receiving directions subtended by rainxel groups

**912** — end

Fig. 9

400

start

401
Calculating the signal attenuation with respect to good weather conditions

402
Calculating the trajectory

403
Calculating the rain rate

404
Calculating the precipitation position

405
Generating a precipitation map

end

Fig. 10a

400

start

401 Calculating the signal
attenuation with respect to
good weather conditions

402 Calculating the
trajectory

403 Calculating the rain
rate

404 Calculating the
precipitation position

405 Generating a
precipitation map

406 Calculating the flow rate
of a watercourse

407 Calculating the pattern of
the free water-surface

408 Calculating the
environmental risk

409 Generating a warning for
territories at risk

410 END

Fig. 10b

Fig. 11

400 ( start )

401 Calculating the signal attenuation with respect to good weather conditions

402 Calculating the trajectory

403 Calculating the rain rate

411 **Calculating the trajectories of the hydrometeors**

404 Calculating the precipitation position

405 Generating a precipitation map

406 Calculating the flow rate of a watercourse

Calculating the pattern of the free water-surface 407

Calculating the environmental risk 408

Generating a warning for territories at risk 409

( END ) 410

Fig. 12

Fig. 13a

Fig. 13b

**REFERENCES CITED IN THE DESCRIPTION**

**Patent documents cited in the description**

- EP 2688223 A

**Non-patent literature cited in the description**

- *Recommendation ITU,* September 2013, 838